# EUROPEAN PATENT APPLICATION

(11) **EP 4 785 902 A1**
(43) Date of publication of application: **05.08.2026**
(21) Application number: 24870495.9
(22) Date of filing: 14.09.2024
(51) Int. Cl.: A61C 19/04

(54) **METHOD AND APPARATUS FOR DETERMINING REST JAW POSITION, AND DEVICE AND STORAGE MEDIUM**

(30) Priority: 28.09.2023 CN 202311286936
(71) Applicant: Shining 3D Tech Co., Ltd., Hangzhou, Zhejiang 311258 (CN)
(72) Inventor: FU, Xiaopeng, Hangzhou, Zhejiang 311258 (CN); ZHAO, Xiaobo, Hangzhou, Zhejiang 311258 (CN); CHEN, Xiaojun, Hangzhou, Zhejiang 311258 (CN); MA, Chao, Hangzhou, Zhejiang 311258 (CN)
(74) Representative: Metida
(86) International application number: PCT/CN2024/119074
(87) International publication number: WO 2025/066951

(57) **Abstract**

A method for determining a rest jaw position, an apparatus, a device, and a storage medium. The method for determining a rest jaw position includes acquiring tooth data and facial data of a tested user; determining a real-time distance between a first measurement point and a second measurement point on a face of the tested user; and if the real-time distance is equal to an upper-lower jaw distance of the tested user in a rest jaw position state, determining a rest jaw position of the tested user based on the tooth data and the facial data. Thus, the rest jaw position of the tested user is determined through a non-contact measurement method, which can reduce human interference, improve the efficiency and accuracy of determining the rest jaw position, thereby assisting users in performing dental restoration precisely and efficiently.

## Description

### TECHNICAL FIELD

The present disclosure relates to the field of digital oral technology, and in particular, to a method for determining a rest jaw position, an apparatus, a device and a storage medium.

### BACKGROUND

A rest jaw position is a term in dentistry describing a spatial positional state of a mandible relative to a maxilla. A corresponding state specifically refers to a jaw state where upper and lower dentitions are naturally separated when upper and lower jaws are completely at rest.

When facing dental restoration needs such as denture design and jaw relationship adjustment, the rest jaw position can serve as an important reference for performing dental restoration, to assist users in determining dental restoration plans. Therefore, it is necessary to propose an accurate and rapid method for determining the rest jaw position to assist users in performing dental restoration precisely and efficiently.

### SUMMARY

To solve the above technical problems, the present disclosure provides a method for determining a rest jaw position, an apparatus, a device, and a storage medium.

In a first aspect, the present disclosure provides a method for determining a rest jaw position. The method includes:
Acquiring tooth data and facial data of a tested user;
Determining a real-time distance between a first measurement point and a second measurement point on a face of the tested user; and
In response to the real-time distance being equal to an upper-lower jaw distance of the tested user in a rest jaw position state, determining the rest jaw position of the tested user based on the tooth data and the facial data.

In some embodiments of the present disclosure, the determining the real-time distance between the first measurement point and the second measurement point on the face of the tested user includes:
Identifying the first measurement point and the second measurement point from the facial data; and
Calculating the real-time distance based on image data corresponding to the first measurement point and image data corresponding to the second measurement point in the facial data.

In some embodiments of the present disclosure, the determining the rest jaw position of the tested user based on the tooth data and the facial data includes:
Mapping the tooth data from a first coordinate system to a target coordinate system, and mapping the facial data from a second coordinate system to the target coordinate system; and
In the target coordinate system, determining the rest jaw position of the tested user based on the tooth data and the facial data.

In some embodiments of the present disclosure, the determining the rest jaw position of the tested user based on the tooth data and the facial data in the target coordinate system includes:
Splicing the tooth data in the target coordinate system onto the facial data in the target coordinate system to determine the rest jaw position of the tested user.

In some embodiments of the present disclosure, the splicing the tooth data in the target coordinate system onto the facial data to determine the rest jaw position of the tested user includes:
Based on tooth marker points of the tested user, splicing the tooth data in the target coordinate system onto the facial data in the target coordinate system to obtain the rest jaw position of the tested user.

In some embodiments of the present disclosure, the splicing the tooth data in the target coordinate system onto the facial data to determine the rest jaw position of the tested user includes:
Based on tooth features of the tested user, splicing the tooth data in the target coordinate system onto the facial data in the target coordinate system to obtain the rest jaw position of the tested user.

In some embodiments of the present disclosure, the method further includes: displaying the rest jaw position, wherein the rest jaw position serves as reference data for performing dental restoration on the tested user, an upper-lower jaw distance corresponding to the rest jaw position is a rest jaw distance, and the rest jaw distance serves as a distance constraint condition for performing dental restoration on the tested user. In a second aspect, the present disclosure provides an apparatus for determining a rest jaw position. The apparatus includes:
An acquisition module configured to acquire tooth data and facial data of a tested user;
A first determination module configured to determine a real-time distance between a first measurement point and a second measurement point on a face of the tested user; and

A second determination module configured to, in response to the real-time distance being equal to an upper-lower jaw distance of the tested user in a rest jaw position state, determine the rest jaw position of the tested user based on the tooth data and the facial data.

In a third aspect, embodiments of the present disclosure further provide an electronic device. The device includes:
A processor, a storage device, and executable instructions stored on the storage device;
Wherein the processor reads the executable instructions from the storage device and implements the method according to any one of claims 1 to 7 when the executable instructions are executed.

In a fourth aspect, embodiments of the present disclosure further provide a computer-readable storage medium having a computer program stored thereon. The computer program, when executed by a processor, implements the method provided in the first aspect.

The technical solutions provided by the embodiments of the present disclosure have the following advantages compared with the prior art:
In the method for determining the rest jaw position, the apparatus, the device, and the storage medium provided by the embodiments of the present disclosure, tooth data and facial data of a tested user are acquired; a real-time distance between a first measurement point and a second measurement point on the face of the tested user is determined; if the real-time distance is equal to an upper-lower jaw distance of the tested user in a rest jaw position state, the rest jaw position of the tested user is determined based on the tooth data and the facial data. Thus, the rest jaw position of the tested user is determined through a non-contact measurement method. The non-contact measurement method can reduce human interference, improve the efficiency and accuracy of determining the rest jaw position, thereby assisting users in performing dental restoration precisely and efficiently.

### BRIEF DESCRIPTION OF THE DRAWINGS

The drawings herein are incorporated into and constitute a part of the specification, illustrate embodiments conforming to the present disclosure, and together with the specification serve to explain the principles of the present disclosure.

To describe the technical solutions in the embodiments of the present disclosure or the prior art more clearly, the following briefly introduces the accompanying drawings required for describing the embodiments or the prior art. Obviously, the accompanying drawings in the following description show some embodiments of the present disclosure, and a person of ordinary skill in the art may still derive other drawings from these accompanying drawings without creative efforts.
FIG. 1 is a schematic flowchart of a method for determining a rest jaw position according to an embodiment of the present disclosure.
FIG. 2 is a schematic flowchart of another method for determining a rest jaw position according to an embodiment of the present disclosure.
FIG. 3 is a schematic diagram of tooth data including marker points according to an embodiment of the present disclosure.
FIG. 4 is a schematic diagram of a state where a user wears a mouth opener according to an embodiment of the present disclosure.
FIG. 5 is a schematic diagram of a state of a rest jaw position according to an embodiment of the present disclosure.
FIG. 6 is a structural schematic diagram of an apparatus for determining a rest jaw position according to an embodiment of the present disclosure.
FIG. 7 is a structural schematic diagram of an electronic device according to an embodiment of the present disclosure.

### DETAILED DESCRIPTION

To make the objectives, technical solutions, and advantages of the present disclosure clearer, the following further describes the solutions of the present disclosure in detail. It should be noted that the embodiments of the present disclosure and the features in the embodiments may be combined with each other in the case of no conflict.

Many specific details are set forth in the following description to facilitate a full understanding of the present disclosure. However, the present disclosure may also be implemented in other ways different from those described herein. Apparently, the embodiments in the specification are only a part of the embodiments of the present disclosure, rather than all the embodiments.

With the rapid development of digital dentistry, more and more oral problems can be well solved. The rest jaw position serves as an important reference in dental restoration such as denture design and maxillofacial relationship adjustment. Studies have found that related technologies include using an occlusal plate recording method, joint analysis recording method, and manual recording method to measure the rest jaw position of a tested user.

The occlusal plate recording method involves having the tested user bite on an occlusal plate, then having the tested user move the mandible upward or forward until the most comfortable position is found, and then using a special wax block or marker pen to mark the rest jaw position of the tested user on the occlusal plate. The joint analysis recording method uses a joint analysis instrument to record the patient's rest jaw position, determining the optimal rest jaw position by analyzing the movement and position of the temporomandibular joint. The manual recording method uses special recording paper or film, placing a layer of film or recording paper between the upper and lower teeth of the tested user, having the tested user bite down, then having the tested user move the mandible upward and forward until the most comfortable position is found, and then using a special marker pen to mark the rest jaw position of the tested patient on the film or recording paper.

In actual use of the above methods to measure the rest jaw position, human intervention is performed on the tested user to keep the mandible at the correct rest jaw position, thereby affecting measurement accuracy and interfering with precise and efficient dental restoration by the user.

To improve the efficiency and accuracy of determining the rest jaw position, embodiments of the present disclosure provide a method for determining a rest jaw position, an apparatus, a device, and a storage medium.

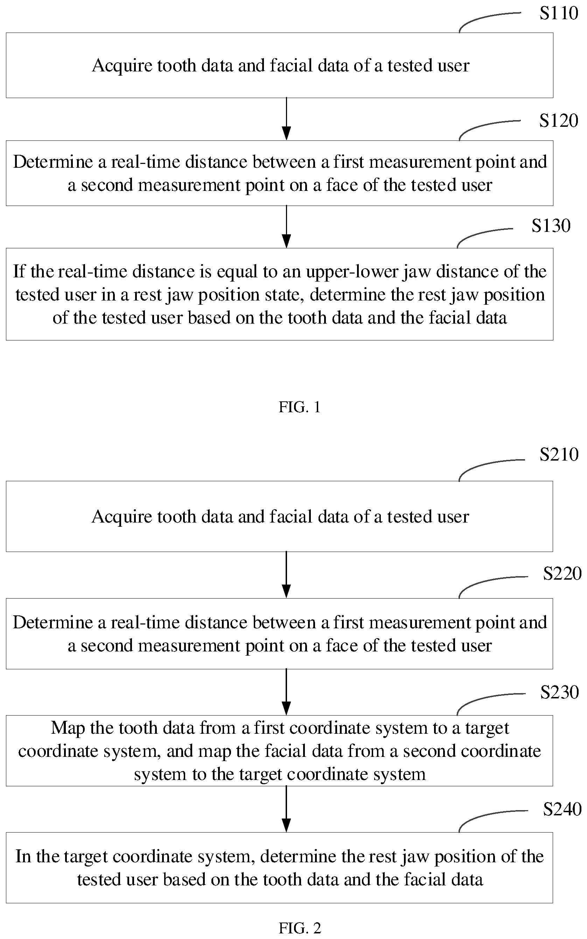

The method for determining a rest jaw position provided by the embodiments of the present disclosure is described below with reference to FIG. 1 to FIG. 4. In the embodiments of the present disclosure, the method for determining the rest jaw position may be executed by an electronic device. The electronic device may include a tablet computer, a desktop computer, a laptop computer, and other devices with communication functions, and may also include devices simulated by a virtual machine or an emulator.

FIG. 1 shows a schematic flowchart of a method for determining the rest jaw position according to an embodiment of the present disclosure.

As shown in FIG. 1, the method for determining the rest jaw position may include the following steps.

S110: Tooth data and facial data of a tested user are acquired.

In this embodiment, when the rest jaw position of the tested user needs to be detected, a tooth data acquisition device and a facial data acquisition device are used to respectively acquire the tooth data and facial data of the tested user, so that the rest jaw position of the tested user is determined by combining the tooth data and facial data.

Optionally, the tooth data acquisition device includes, but is not limited to, an intraoral scanner. The facial data acquisition device includes, but is not limited to, a facial scanner. The tooth data includes, but is not limited to, maxillary data, maxillary marker points, mandibular data, and mandibular marker points. The facial scan data includes, but is not limited to, a nose tip point, a chin anterior point, maxillary marker points, and mandibular marker points.

In some embodiments, a plurality of marker points are attached to upper and lower jaw teeth of the tested user. During an opening and closing movement of the tested user, the tooth data acquisition device is used to scan the upper jaw teeth, the lower jaw teeth, and the marker points on the upper and lower jaw teeth of the tested user, thereby obtaining the tooth data. At the same time, the tested user wears a mouth opener with a plurality of marker points attached. During the opening and closing movement of the tested user, the facial data acquisition device is used to scan the upper jaw teeth, the lower jaw teeth, and the marker points on the upper and lower jaw teeth of the tested user, thereby obtaining the facial data.

In other embodiments, during the opening and closing movement of the tested user, the tooth data acquisition device is used to scan tooth features on the upper jaw teeth and tooth features on the lower jaw teeth of the tested user to acquire image data, thereby obtaining the tooth data. At the same time, the facial data acquisition device is used to scan the tooth features on the upper jaw teeth and the tooth features on the lower jaw teeth of the tested user, thereby obtaining the facial data.

S120: A real-time distance between a first measurement point and a second measurement point on a face of the tested user is determined.

In this embodiment, before acquiring the tooth data and facial data of the tested user, the first measurement point and the second measurement point are attached to the face of the tested user. After acquiring the tooth data and facial data of the tested user, the real-time distance between the first measurement point and the second measurement point is determined, so that whether the tested user is in the rest jaw position is judged based on the real-time distance.

The first measurement point and the second measurement point are marking points for measuring when the tested user is in the rest jaw position state.

Optionally, the first measurement point is the nose tip point of the tested user, and the second measurement point is the chin anterior point of the tested user. Alternatively, the first measurement point is the chin anterior point of the tested user, and the second measurement point is the nose tip point of the tested user.

The real-time distance includes, but is not limited to, a first upper-lower jaw distance when the tested user is in the rest jaw position state, a second upper-lower jaw distance when the tested user is in an occlusal jaw position state, and an upper-lower jaw distance when the tested user is in any other state.

In this embodiment, specific implementations of S120 include, but are not limited to, the following method: the first measurement point and the second measurement point are identified from the facial data; the real-time distance is calculated based on image data corresponding to the first measurement point and image data corresponding to the second measurement point in the facial data.

Specifically, the electronic device may identify the first measurement point and the second measurement point based on user selection or automatic identification, and determine the image data corresponding to the first measurement point and the image data corresponding to the second measurement point. The image data of each measurement point can be understood as coordinate data. Then, based on the image data corresponding to the first measurement point and the image data corresponding to the second measurement point, the real-time distance between the first measurement point and the second measurement point is calculated.

S130: If the real-time distance is equal to an upper-lower jaw distance of the tested user in a rest jaw position state, the rest jaw position of the tested user is determined based on the tooth data and the facial data.

In this embodiment, as described above, before acquiring the tooth data and facial data of the tested user, the first measurement point and the second measurement point are attached to the face of the tested user, so that the tested user, under a guidance of a professional user, is in a state where the upper and lower jaws are completely at rest. At this time, the jaw state of the tested user is in the rest jaw position state. Then, the upper-lower jaw distance when the tested user is in the rest jaw position state can be determined by using a measuring tool or the facial data acquisition device.

Further, after the real-time distance is determined, it is judged whether the real-time distance is equal to the upper-lower jaw distance when the tested user is in the rest jaw position state. If it is judged that the real-time distance is equal to the upper-lower jaw distance, it indicates that the tested user is currently in the rest jaw position state, and the rest jaw position corresponding to the rest jaw position state is determined based on the tooth data and facial data.

In the method for determining the rest jaw position according to the embodiment of the present disclosure, the tooth data and facial data of the tested user are acquired; the real-time distance between the first measurement point and the second measurement point on the face of the tested user is determined; if the real-time distance is equal to the upper-lower jaw distance of the tested user in the rest jaw position state, the rest jaw position of the tested user is determined based on the tooth data and the facial data. Thus, the rest jaw position of the tested user is determined through a non-contact measurement method. The non-contact measurement method can reduce human interference, improve the efficiency and accuracy of determining the rest jaw position, thereby assisting users in performing dental restoration precisely and efficiently.

In another embodiment of the present disclosure, the specific implementation process of "determining the rest jaw position of the tested user based on the tooth data and the facial data" in S130 is explained in detail.

FIG. 2 shows a schematic flowchart of another method for determining a rest jaw position according to an embodiment of the present disclosure.

As shown in FIG. 2, the method for determining a rest jaw position may include the following steps.

S210: Tooth data and facial data of a tested user are acquired.

S220: A real-time distance between a first measurement point and a second measurement point on the face of the tested user is determined.

S210 to S220 are similar to S110 to S120, and details are not repeated here.

S230: The tooth data is mapped from a first coordinate system to a target coordinate system, and the facial data is mapped from a second coordinate system to the target coordinate system.

It can be understood that during the scanning of the tested user by the tooth data acquisition device, the coordinate system corresponding to the tooth data acquisition device is the first coordinate system, so the tooth data is located in the first coordinate system. During the scanning of the tested user by the facial data acquisition device, the coordinate system corresponding to the facial data acquisition device is the second coordinate system, so the facial data is located in the second coordinate system. If the first coordinate system and the second coordinate system are not the same, the tooth data and facial data cannot be processed. For this reason, the tooth data needs to be mapped from the first coordinate system to the target coordinate system, and the facial data needs to be mapped from the second coordinate system to the target coordinate system, so that the tooth data and facial data can be processed in a unified target coordinate system.

Optionally, the target coordinate system may be the first coordinate system, may be the second coordinate system, or may be another coordinate system different from both the first coordinate system and the second coordinate system.

S240: In the target coordinate system, the rest jaw position of the tested user is determined based on the tooth data and the facial data.

In this embodiment, implementations of S240 include, but are not limited to, following method: the tooth data in the target coordinate system is spliced onto the facial data in the target coordinate system to determine the rest jaw position of the tested user.

In some embodiments, splicing the tooth data in the target coordinate system onto the facial data in the target coordinate system to determine the rest jaw position of the tested user is specifically implemented as follows: based on tooth marker points of the tested user, the tooth data in the target coordinate system is spliced onto the facial data in the target coordinate system to obtain the rest jaw position of the tested user.

In some embodiments, splicing the tooth data in the target coordinate system onto the facial data in the target coordinate system to determine the rest jaw position of the tested user is specifically implemented as follows: based on tooth features of the tested user, the tooth data in the target coordinate system is spliced onto the facial data in the target coordinate system to obtain the rest jaw position of the tested user.

Specifically, the tooth data acquisition device can scan the tooth marker points or tooth features of the tested user, the facial data acquisition device can scan the tooth marker points or tooth features of the tested user; or both the tooth data acquisition device and the facial data acquisition device can scan the tooth marker points and the tooth features of the tested user. Therefore, the tooth data in the target coordinate system can be spliced onto the facial data in the target coordinate system, so that the tooth data and facial data are aligned, thereby determining the rest jaw position of the tested user.

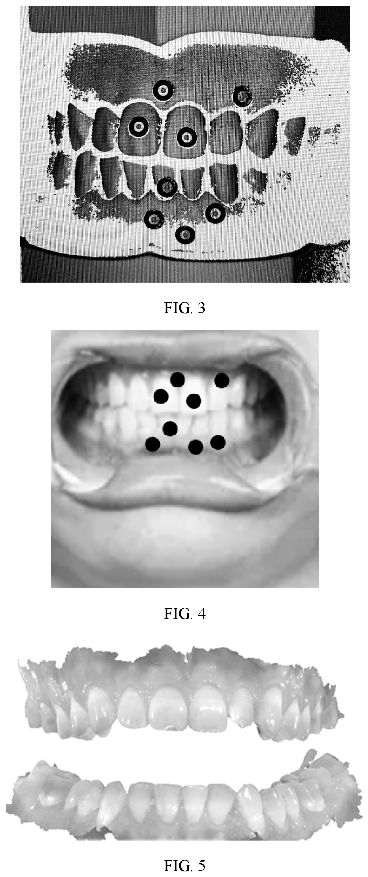

The tooth marker points can be used to assist in splicing the tooth data and facial data. For example, four marker points are attached to the upper jaw teeth of the tested user and four marker points are attached to the lower jaw teeth of the tested user. After the tooth data acquisition device scans the teeth of the tested user, multiple frames of scan data are obtained, that is, the tooth data including the marker points as shown in FIG. 3 is obtained. At the same time, as shown in FIG. 4, after the tested user wears a mouth opener and a plurality of marker points are attached to the upper and lower jaw teeth of the tested user, the facial data acquisition device is used to scan the upper jaw teeth, the lower jaw teeth, and the marker points on the upper and lower jaw teeth of the tested user, thereby obtaining facial data. Then, based on the tooth marker points, the tooth data in the target coordinate system is spliced onto the facial data in the target coordinate system to determine the rest jaw position of the tested user.

The tooth features can be understood as texture features of the tested user's teeth and can be used to splice the tooth data and facial data.

Thus, the rest jaw position of the tested user can be determined by combining the tooth data and facial data of the tested user, ensuring the efficiency and accuracy of determining the rest jaw position.

Further, after the rest jaw position is determined, the rest jaw position can also be displayed, so that the rest jaw position serves as reference data for performing dental restoration on the tested user, achieving the effect of assisting users in performing dental restoration precisely and efficiently.

The upper-lower jaw distance corresponding to the rest jaw position is the rest jaw distance. The rest jaw distance serves as a distance constraint condition for performing dental restoration on the tested user, thereby providing users with more reference data for dental restoration.

The specific explanation of the method for determining the rest jaw distance is as described above. Before acquiring the tooth data and facial data of the tested user, the first measurement point and the second measurement point are attached to the face of the tested user. The tested user performs the opening and closing movement under the guidance of a professional user. When it is detected that the real-time distance is equal to the first upper-lower jaw distance when the tested user is in the rest jaw position state, the first upper-lower jaw distance is recorded. When it is detected that the real-time distance is equal to the second upper-lower jaw distance when the tested user is in the occlusal jaw position state, the second upper-lower jaw distance is recorded. The first upper-lower jaw distance is subtracted from the second upper-lower jaw distance to obtain the upper-lower jaw distance corresponding to the rest jaw position, which is the rest jaw distance.

For ease of understanding, refer to the schematic diagram of the state of the rest jaw position shown in FIG. 5. When the tested user is in the rest jaw position state, the rest jaw position of the tested user can be determined based on the tooth data and facial data. Moreover, the upper-lower jaw distance corresponding to the rest jaw position is the rest jaw distance.

Thus, after the rest jaw position is determined, the rest jaw position and the rest jaw distance are visually presented to the user, achieving the effect of assisting users in performing dental restoration precisely and efficiently.

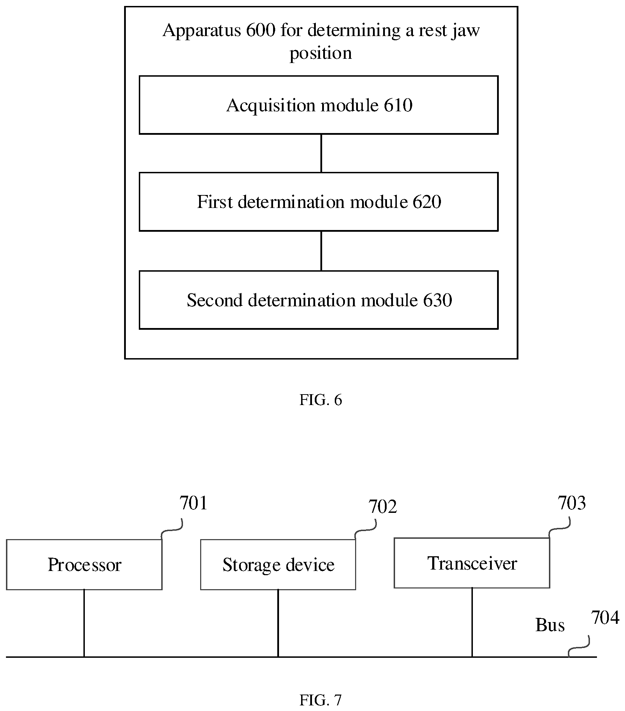

The present disclosure further provides an apparatus for implementing the above method for determining a rest jaw position, which is described below with reference to FIG. 6. In the embodiments of the present disclosure, the apparatus for determining the rest jaw position may be an electronic device. The electronic device may include a tablet computer, a desktop computer, a laptop computer, and other devices with communication functions, and may also include devices simulated by a virtual machine or an emulator.

FIG. 6 shows a structural schematic diagram of the apparatus for determining the rest jaw position according to an embodiment of the present disclosure.

As shown in FIG. 6, an apparatus 600 for determining the rest jaw position may include:

An acquisition module 610 configured to acquire tooth data and facial data of a tested user.

A first determination module 620 configured to determine a real-time distance between a first measurement point and a second measurement point on the face of the tested user.

A second determination module 630 configured to, if the real-time distance is equal to an upper-lower jaw distance of the tested user in a rest jaw position state, determine the rest jaw position of the tested user based on the tooth data and the facial data.

In the apparatus for determining the rest jaw position according to the embodiment of the present disclosure, tooth data and facial data of the tested user are acquired; the real-time distance between the first measurement point and the second measurement point on the face of the tested user is determined; if the real-time distance is equal to an upper-lower jaw distance of the tested user in a rest jaw position state, the rest jaw position of the tested user is determined based on the tooth data and the facial data. Thus, the rest jaw position of the tested user is determined through a non-contact measurement method. The non-contact measurement method can reduce human interference, improve the efficiency and accuracy of determining the rest jaw position, thereby assisting users in performing dental restoration precisely and efficiently.

In some embodiments of the present disclosure, the first determination module 620 includes:
An identification unit configured to identify the first measurement point and the second measurement point from the facial data.

A calculation unit configured to calculate the real-time distance based on image data corresponding to the first measurement point and image data corresponding to the second measurement point in the facial data.

In some embodiments of the present disclosure, the second determination module 630 includes:
A mapping unit configured to map the tooth data from a first coordinate system to a target coordinate system, and map the facial data from a second coordinate system to the target coordinate system;
A determination unit configured to, in the target coordinate system, determine the rest jaw position of the tested user based on the tooth data and the facial data.

In some embodiments of the present disclosure, the determination unit is specifically configured to:
A splicing subunit configured to splice the tooth data in the target coordinate system onto the facial data in the target coordinate system to determine the rest jaw position of the tested user.

In some embodiments of the present disclosure, the splicing subunit is specifically configured to: based on tooth marker points of the tested user, splice the tooth data in the target coordinate system onto the facial data in the target coordinate system to obtain the rest jaw position of the tested user.

In some embodiments of the present disclosure, the splicing subunit is specifically configured to: based on tooth features of the tested user, splice the tooth data in the target coordinate system onto the facial data in the target coordinate system to obtain the rest jaw position of the tested user.

In some embodiments of the present disclosure, the apparatus further includes:
A display module configured to display the rest jaw position, where the rest jaw position serves as reference data for performing dental restoration on the tested user, the upper-lower jaw distance corresponding to the rest jaw position is a rest jaw distance, and the rest jaw distance serves as a distance constraint condition for performing dental restoration on the tested user.

It should be noted that the apparatus 600 for determining the rest jaw position shown in FIG. 6 may execute the steps in the method embodiments shown in FIG. 1 to FIG. 5 and implement the processes and effects in the method embodiments shown in FIG. 1 to FIG. 5, and details are not repeated here.

FIG. 7 shows a structural schematic diagram of an electronic device according to an embodiment of the present disclosure.

As shown in FIG. 7, the electronic device may include a processor 701 and a storage device 702 storing computer program instructions.

Specifically, the processor 701 may include a central processing unit (CPU), or an application specific integrated circuit (ASIC), or one or more integrated circuits configured to implement one or more embodiments of the present application.

The storage device 702 may include a mass memory for storing information or instructions. By way of example and not limitation, the storage device 702 may include a hard disk drive (HDD), a floppy disk drive, flash memory, an optical disc, a magneto-optical disc, magnetic tape, or a universal serial bus (USB) drive, or a combination of two or more of the above. Where appropriate, the storage device 702 may include removable or non-removable (or fixed) media. Where appropriate, the storage device 702 may be internal or external to the integrated gateway device. In specific embodiments, the storage device 702 is a non-volatile solid-state memory. In specific embodiments, the storage device 702 includes a read-only memory (ROM). Where appropriate, the ROM may be a mask-programmed ROM, a programmable ROM (PROM), an erasable PROM (EPROM), an electrically erasable PROM (EEPROM), an electrically alterable ROM (EAROM), or flash memory, or a combination of two or more of the above.

The processor 701 executes the steps of the method for determining the rest jaw position provided by the embodiments of the present disclosure by reading and executing the computer program instructions stored in the storage device 702.

In an example, the electronic device may further include a transceiver 703 and a bus 704. As shown in FIG. 7, the processor 701, the storage device 702, and the transceiver 703 are connected via the bus 704 and complete communication with each other.

The bus 704 includes hardware, software, or both. By way of example and not limitation, the bus may include an Accelerated Graphics Port (AGP) or other graphics bus, an Extended Industry Standard Architecture (EISA) bus, a Front Side Bus (FSB), a Hyper Transport (HT) interconnect, an Industry Standard Architecture (ISA) bus, an InfiniBand interconnect, a Low Pin Count (LPC) bus, a memory bus, a Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association Local Bus (VLB) bus, or another suitable bus, or a combination of two or more of the above. Where appropriate, the bus 704 may include one or more buses. Although specific buses are described and illustrated in the embodiments of the present application, any suitable bus or interconnect is considered in the present application.

The following is an embodiment of a computer-readable storage medium provided by the embodiments of the present disclosure. The computer-readable storage medium belongs to the same inventive concept as the method for determining a rest jaw position in the above embodiments. Details not described in the embodiment of the computer-readable storage medium may refer to the embodiments of the method for determining a rest jaw position.

This embodiment provides a storage medium including computer-executable instructions. When the computer-executable instructions are executed by a computer processor, a method for determining a rest jaw position is implemented. The method includes:
Tooth data and facial data of a tested user are acquired.

A real-time distance between a first measurement point and a second measurement point on the face of the tested user is determined.

If the real-time distance is equal to an upper-lower jaw distance of the tested user in a rest jaw position state, the rest jaw position of the tested user is determined based on the tooth data and the facial data.

Certainly, the computer-executable instructions in the storage medium including computer-executable instructions provided by the embodiments of the present disclosure are not limited to the method operations described above, and may also perform related operations in the method for determining the rest jaw position provided by any embodiment of the present disclosure.

Through the above description of the implementation manners, those skilled in the art can clearly understand that the present disclosure may be implemented by means of software plus necessary general hardware, or of course may be implemented by hardware, but in many cases, the former is a better implementation manner. Based on such understanding, the essence of the technical solution of the present disclosure or the part contributing to the prior art may be embodied in the form of a software product. The computer software product is stored in a computer-readable storage medium, such as a floppy disk, a read-only memory (ROM), a random access memory (RAM), a flash memory (FLASH), a hard disk, or an optical disc of a computer, and includes several instructions for instructing a computer device (which may be a personal computer, a server, a network device, etc.) to execute the method for determining a rest jaw position provided by the various embodiments of the present disclosure.

Note that the above are only preferred embodiments of the present disclosure and the applied technical principles. Those skilled in the art will understand that the present disclosure is not limited to the specific embodiments described herein, and various obvious changes, readjustments, and substitutions can be made by those skilled in the art without departing from the scope of protection of the present disclosure. Therefore, although the present disclosure has been described in detail through the above embodiments, the present disclosure is not limited to the above embodiments, and may include more other equivalent embodiments without departing from the concept of the present disclosure. The scope of the present disclosure is determined by the scope of the appended claims.

### INDUSTRIAL APPLICABILITY

In the method for determining a rest jaw position provided by the present disclosure, the rest jaw position of the tested user is determined through a non-contact measurement method. The non-contact measurement method can reduce human interference, improve the efficiency and accuracy of determining the rest jaw position, thereby assisting users in performing dental restoration precisely and efficiently, and has strong industrial applicability.

## Claims

1. A method for determining a rest jaw position, comprising:
acquiring tooth data and facial data of a tested user;
determining a real-time distance between a first measurement point and a second measurement point on a face of the tested user; and
in response to a determination that the real-time distance is equal to an upper-lower jaw distance of the tested user in a rest jaw position state, determining the rest jaw position of the tested user based on the tooth data and the facial data.

2. The method according to claim **1,** wherein the determining the real-time distance between the first measurement point and the second measurement point on the face of the tested user comprises:
identifying the first measurement point and the second measurement point from the facial data; and
calculating the real-time distance based on image data corresponding to the first measurement point and image data corresponding to the second measurement point in the facial data.

3. The method according to claim **1,** wherein the determining the rest jaw position of the tested user based on the tooth data and the facial data comprises:
mapping the tooth data from a first coordinate system to a target coordinate system, and mapping the facial data from a second coordinate system to the target coordinate system; and
determining, in the target coordinate system, the rest jaw position of the tested user based on the tooth data and the facial data.

4. The method according to claim 3, wherein the determining, in the target coordinate system, the rest jaw position of the tested user based on the tooth data and the facial data comprises:
splicing the tooth data in the target coordinate system onto the facial data in the target coordinate system to determine the rest jaw position of the tested user.

5. The method according to claim 4, wherein the splicing the tooth data in the target coordinate system onto the facial data in the target coordinate system to determine the rest jaw position of the tested user comprises:
based on tooth marker points of the tested user, splicing the tooth data in the target coordinate system onto the facial data in the target coordinate system to obtain the rest jaw position of the tested user.

6. The method according to claim 4, wherein the splicing the tooth data in the target coordinate system onto the facial data in the target coordinate system to determine the rest jaw position of the tested user comprises:
based on tooth features of the tested user, splicing the tooth data in the target coordinate system onto the facial data in the target coordinate system to obtain the rest jaw position of the tested user.

7. The method according to any one of claims 1 to 6, further comprising:
displaying the rest jaw position, wherein the rest jaw position serves as reference data for performing a dental restoration on the tested user, the upper-lower jaw distance corresponding to the rest jaw position is a rest jaw distance, and the rest jaw distance serves as a distance constraint condition for performing the dental restoration on the tested user.

8. An apparatus for determining a rest jaw position, comprising:
an acquisition module configured to acquire tooth data and facial data of a tested user;
a first determination module configured to determine a real-time distance between a first measurement point and a second measurement point on a face of the tested user; and
a second determination module configured to, in response to a determination that the real-time distance is equal to an upper-lower jaw distance of the tested user in a rest jaw position state, determine the rest jaw position of the tested user based on the tooth data and the facial data.

9. An electronic device, comprising:
a processor, a storage device, and executable instructions stored on the storage device;
wherein the processor reads the executable instructions from the storage device and implements the method according to any one of claims 1 to 7 when the executable instructions are executed.

10. A computer-readable storage medium having a computer program stored thereon, wherein the storage medium stores the computer program, and when the computer program is executed by a processor, the processor is caused to implement the method according to any one of claims 1 to 7.
